# EUROPEAN PATENT APPLICATION

(11) **EP 3 828 682 A1**
(43) Date of publication of application: **02.06.2021**
(21) Application number: 20178523.5
(22) Date of filing: 05.06.2020
(51) Int. Cl.: G06F 3/0481, G06F 3/0486, G06F 9/451

(54) **METHOD, APPARATUS FOR ADDING SHORTCUT PLUG-IN, AND INTELLIGENT DEVICE**

(30) Priority: 28.11.2019 CN 201911195303
(71) Applicant: Beijing Xiaomi Mobile Software Co., Ltd., Beijing 100085 (CN)
(72) Inventor: PEI, Zetan, Beijing, 100085 (CN)
(74) Representative: Kudlek, Franz Thomas

(57) **Abstract**

The present disclosure relates to a method, an apparatus for adding a shortcut plug-in, and an intelligent device. The method includes: displaying (S101, S501, S601) a shortcut plug-in area in a setting range of a user interface in response to detecting a preset operation for the user interface, the shortcut plug-in area being used to provide one or more shortcut plug-ins therein; and adding (S102, S402, S502) a shortcut plug-in corresponding to a target object into the shortcut plug-in area. The present disclosure can quickly display the shortcut plug-in area based on the preset operation of the user, and can accurately and quickly add the shortcut plug-in into the displayed shortcut plug-in area according to the needs of the users, without requiring the user to spend extra time in searching for an APP that needs to be added in a specific option in the system setting, which can simplify the operation process of setting the shortcut plug-in, improve the efficiency of adding the shortcut plug-in, and then improve the user experience.

## Description

This application is based on a Chinese patent application with an application number of 201911195303.2 and an application date of November 28, 2019, and claims the priority of the Chinese patent application. The entire contents of this Chinese patent application are incorporated herein by reference.

### TECHNICAL FIELD

The present disclosure relates to the technical field of terminals, and in particular, to a method, an apparatus for adding a shortcut plug-in, and an intelligent device.

### BACKGROUND

In related technologies, users can browse contents that they need through various application apps, such as course schedules and work schedules, that can be provided in a mobile phone system, and can also set commonly used apps as shortcut plug-ins of the desktop, to facilitate seeking and use later. However, in the current solution, when a user wants to set a shortcut plug-in, they need to spend extra time to find a target APP and set it in a specific option in the system setting. The operation process is tedious, consumes much time, and reduces the user experience.

### SUMMARY

In order to overcome problems existing in the related technology, the embodiments of the present invention provide a method, an apparatus for adding a shortcut plug-in, and an intelligent device, to solve defects in the related technology.

According to a first aspect of the present invention, there is provided a method for adding a shortcut plug-in, applied to a terminal, wherein the method includes:
displaying a shortcut plug-in area in a setting range on a user interface, in response to detecting a preset operation for the user interface, wherein the shortcut plug-in area is used to provide one or more shortcut plug-ins therein; and
adding a shortcut plug-in corresponding to a target object into the shortcut plug-in area.

In an embodiment, the adding a shortcut plug-in corresponding to a target object into the shortcut plug-in area includes:
activating the shortcut plug-in area in response to a first setting operation for the target object on the user interface;
adding the shortcut plug-in corresponding to the target object into the shortcut plug-in area, in response to a second setting operation for the target object on the user interface.

In an embodiment, the adding the shortcut plug-in corresponding to the target object into the shortcut plug-in area, in response to a second setting operation for the target object on the user interface, includes:
forming a plug-in vacancy in the shortcut plug-in area based on a current position of the target object and/or a movement direction corresponding to the second setting operation;
inserting the shortcut plug-in corresponding to the target object into the plug-in vacancy.

In an embodiment, the displaying a shortcut plug-in area in a setting range on a user interface, in response to detecting a preset operation for the user interface, includes:
moving out of an application icon currently located within the setting range and displaying the shortcut plug-in area in the setting range, in response to detecting the preset operation for the user interface.

In an embodiment, the method further includes:
converting a target plug-in in the shortcut plug-in area from a stationary state to a to-be-moved state, in response to a selection operation for the target plug-in;
adjusting a sequence of plug-ins in which the target plug-in is located in the plug-in area, in response to a movement operation for the target plug-in.

In an embodiment, the method further includes:
hiding the shortcut plug-in area, and restoring the user interface to a state before the shortcut plug-in area is displayed, in response to a designated operation for the shortcut plug-in area.

In an embodiment, the adding a shortcut plug-in corresponding to a target object into the shortcut plug-in area includes:
adding a shortcut plug-in corresponding to an application into the shortcut plug-in area, when the target object is an icon of the application; or,
adding a shortcut plug-in corresponding to a text obj ect in a currently browsed file into the shortcut plug-in area, when the target object is the text object.

According to a second aspect of the present invention, there is provided an apparatus for adding a shortcut plug-in, applied to a terminal, wherein the apparatus includes:
a plug-in area display module, configured to display a shortcut plug-in area in a setting range on a user interface, in response to detecting a preset operation for the user interface, wherein the shortcut plug-in area is used to provide one or more shortcut plug-ins therein; and
a shortcut plug-in adding module, configured to add a shortcut plug-in corresponding to a target object into the shortcut plug-in area.

In an embodiment, the shortcut plug-in adding module includes:
a plug-in area activation unit, configured to activate the shortcut plug-in area in response to a first setting operation for the target object on the user interface;
a shortcut plug-in adding unit, configured to add the shortcut plug-in corresponding to the target object into the shortcut plug-in area, in response to a second setting operation for the target object on the user interface.

In an embodiment, the shortcut plug-in adding unit is further configured to:
form a plug-in vacancy in the shortcut plug-in area based on a current position of the target object and/or a movement direction corresponding to the second setting operation;
insert the shortcut plug-in corresponding to the target object into the plug-in vacancy.

In an embodiment, the plug-in area display module is further configured to move out of an application icon currently located within the setting range and display the shortcut plug-in area in the setting range, in response to detecting the preset operation for the user interface.

In an embodiment, the apparatus further includes a plug-in sequence adjustment module,
wherein the plug-in sequence adjustment module includes:
a plug-in state conversion unit, configured to convert a target plug-in in the shortcut plug-in area from a stationary state to a to-be-moved state, in response to a selection operation for the target plug-in;
a plug-in sequence adjustment unit, configured to adjust a sequence of plug-ins in which the target plug-in is located in the plug-in area, in response to a movement operation for the target plug-in.

In an embodiment, the apparatus further includes:
a plug-in area hiding module, configured to hide the shortcut plug-in area, and restore the user interface to a state before the shortcut plug-in area is displayed, in response to a designated operation for the shortcut plug-in area.

In an embodiment, the shortcut plug-in adding module is further configured to:
add a shortcut plug-in corresponding to an application into the shortcut plug-in area, when the target object is an icon of the application; or,
add a shortcut plug-in corresponding to a text object in a currently browsed file into the shortcut plug-in area, when the target object is the text object.

According to a third aspect of the present invention, there is provided an intelligent device, including:
a processor and a memory for storing instructions executable by the processor,
wherein the processor is configured to:
display a shortcut plug-in area in a setting range on a user interface, in response to detecting a preset operation for the user interface, wherein the shortcut plug-in area is used to provide one or more shortcut plug-ins therein; and
add a shortcut plug-in corresponding to a target object into the shortcut plug-in area.

According to a fourth aspect of the present invention, there is provided a computer-readable storage medium having stored thereon a computer program, wherein the program implements following steps when executed by a processor:
displaying a shortcut plug-in area in a setting range on a user interface, in response to detecting a preset operation for the user interface, wherein the shortcut plug-in area is used to provide one or more shortcut plug-ins therein; and
adding a shortcut plug-in corresponding to a target object into the shortcut plug-in area.

The technical solutions provided by the present invention may include the following beneficial effects.

By displaying a shortcut plug-in area in a setting range on a user interface, in response to detecting a preset operation for the user interface; and adding a shortcut plug-in corresponding to a target object into the shortcut plug-in area, the present disclosure can quickly display the shortcut plug-in area based on the preset operation of the user, and can accurately and quickly add the shortcut plug-in into the displayed shortcut plug-in area according to the needs of the users, without requiring the user to spend extra time in searching for an APP that needs to be added in a specific option in the system setting, which can simplify the operation process of setting the shortcut plug-in, improve the efficiency of adding the shortcut plug-in, and then improve the user experience.

It should be understood that the above general description and the following detailed description are merely exemplary and explanatory and should not be construed as limiting of the present disclosure.

### BRIEF DESCRIPTION OF THE DRAWINGS

The drawings herein are incorporated in and constitute a part of this specification, illustrate embodiments consistent with the present disclosure, and together with the description serve to explain the principles of the present disclosure.
Fig. 1A is a flowchart showing a method for adding a shortcut plug-in according to an exemplary embodiment;
Fig. 1B is a schematic diagram illustrating a preset operation for a user interface according to an exemplary embodiment;
Fig. 1C is a schematic diagram illustrating a preset operation for a user interface according to another exemplary embodiment;
Fig. 1D is a schematic diagram illustrating a preset operation for a user interface according to still another exemplary embodiment;
Fig. 2 is a flowchart illustrating how to add a shortcut plug-in corresponding to a target object into a shortcut plug-in area according to an exemplary embodiment;
Fig. 3A is a flowchart illustrating how to add a shortcut plug-in corresponding to a target object into a shortcut plug-in area according to another exemplary embodiment;
Fig. 3B is a schematic diagram of inserting a shortcut plug-in corresponding to a target object into a plug-in vacancy according to an exemplary embodiment;
Fig. 4A is a flowchart showing a method for adding a shortcut plug-in according to another exemplary embodiment;
Fig. 4B is a schematic diagram of removing an application icon within a setting range for displaying a shortcut plug-in area according to an exemplary embodiment;
Fig. 5A is a flowchart illustrating a method for adding a shortcut plug-in according to still another exemplary embodiment;
Fig. 5B is a schematic diagram illustrating adjusting a sequence of plug-ins in which the target plug-in is located in the plug-in area according to an exemplary embodiment;
Fig. 5C is a schematic diagram illustrating removing a plug-in in a plug-in area according to an exemplary embodiment;
Fig. 6A is a flowchart illustrating a method for adding a shortcut plug-in according to yet still another exemplary embodiment;
Fig. 6B is a schematic diagram of adding a shortcut plug-in corresponding to a text object in a currently browsed file into the shortcut plug-in area according to an exemplary embodiment;
Fig. 7 is a block diagram of an apparatus for adding a shortcut plug-in according to an exemplary embodiment;
Fig. 8 is a block diagram illustrating an apparatus for adding a shortcut plug-in according to another exemplary embodiment; and
Fig. 9 is a block diagram showing an intelligent device according to an exemplary embodiment.

### DETAILED DESCRIPTION

Exemplary embodiments will be described in detail herein, examples of which are illustrated in the accompanying drawings. When the following description refers to the accompanying drawings, the same numerals in different drawings represent the same or similar elements unless otherwise indicated. The implementations described in the following exemplary embodiments do not represent all implementations consistent with the present disclosure. Rather, they are merely examples of apparatuses and methods consistent with some aspects of the disclosure as detailed in the appended claims.

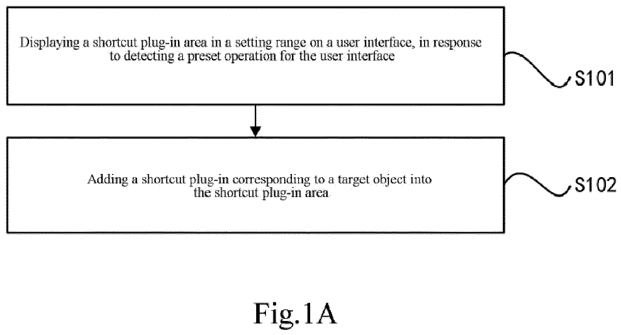

Fig. 1A is a flowchart illustrating a method for adding a shortcut plug-in according to an exemplary embodiment. The method for adding a shortcut plug-in may be applied to a terminal device, such as a smart phone, a tablet computer, a wearable device, and the like. As shown in Fig. 1A, the method for adding a shortcut plug-in includes following steps S101-S102.

In step S101: a shortcut plug-in area is displayed in a setting range on a user interface, in response to detecting a preset operation for the user interface.

In the embodiment, the shortcut plug-in area is used to provide one or more shortcut plug-ins therein.

For example, when a user uses a terminal device such as a smart phone, if the user wants to set a commonly used application APP or target text content and other objects as a shortcut plug-in for subsequent quick search and use, a preset operation may be performed for the user interface of the terminal device, to display a shortcut plug-in area in a setting area on the user interface.

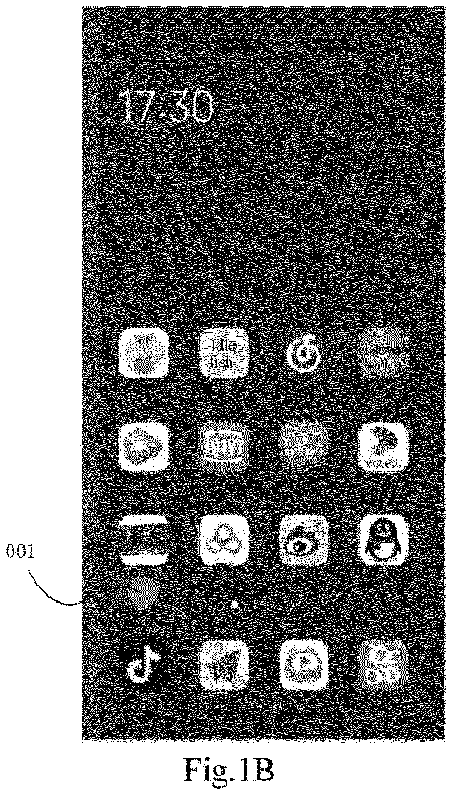

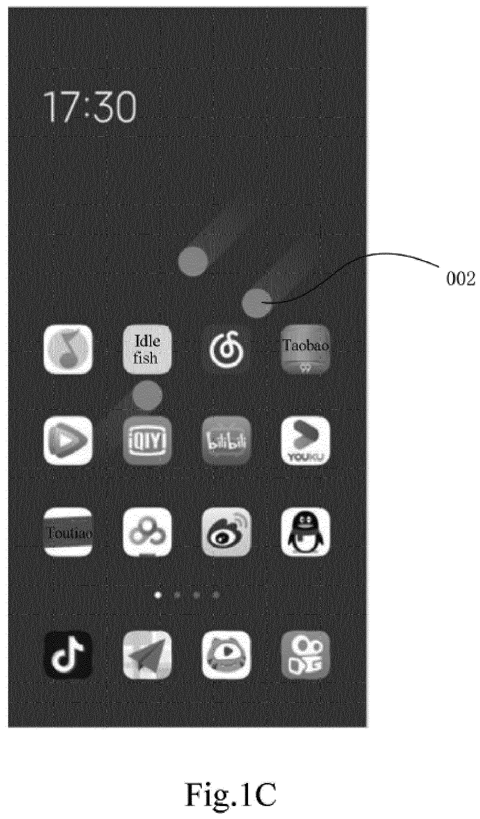

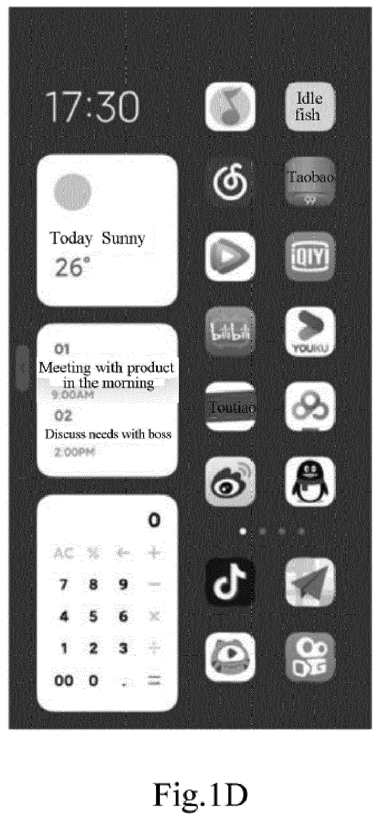

Fig. 1B is a schematic diagram illustrating a preset operation for a user interface according to an exemplary embodiment. Fig. 1C is a schematic diagram illustrating a preset operation for a user interface according to another exemplary embodiment. Fig. 1D is a schematic diagram illustrating a preset operation for a user interface according to still another exemplary embodiment. In the embodiment, the dots 001 or 002 and gradient color areas thereafter are used to indicate movement track of the user's finger. The above preset operation for the user interface of the terminal device can be freely set by a developer or a user according to actual needs. Referring to Fig. 1B, the preset operation may be sliding a left edge of the user interface to the right. Alternatively, referring to Fig. 1C, the preset operation may be set to perform a three-finger pinch operation on the user interface, and the like, which is not limited in this embodiment.

In this embodiment, after the terminal device detects the above-mentioned preset operation for the user interface, the shortcut plug-in area may be displayed in a setting range on the user interface.

It is worth noting that the above setting range on the user interface can be freely set by the developer or the user according to actual needs, such as setting as a left half part of the user interface, and the like. For example, the area where plug-ins about the weather, memo, calculator and the like are shown in Fig. 1D, which is not limited in this embodiment.

In step S102, a shortcut plug-in corresponding to a target object is added into the shortcut plug-in area.

For example, after the terminal device detects a user's setting operation for the target object, in response to the operation, a shortcut plug corresponding to the target object may be added into the shortcut plug-in area displayed on the user interface.

The target object may be an icon of each application APP on the terminal device or a text object (such as a work schedule, a curriculum, or a memo content, or the like) in the application.

In an embodiment, the above-mentioned setting operation for the target object may include operations such as clicking, double-clicking, long-pressing, dragging or the like, which is not limited in this embodiment.

For example, when the terminal device detects a dragging operation for the target object, the target object may be added into a shortcut plug-in area corresponding to the dragging operation.

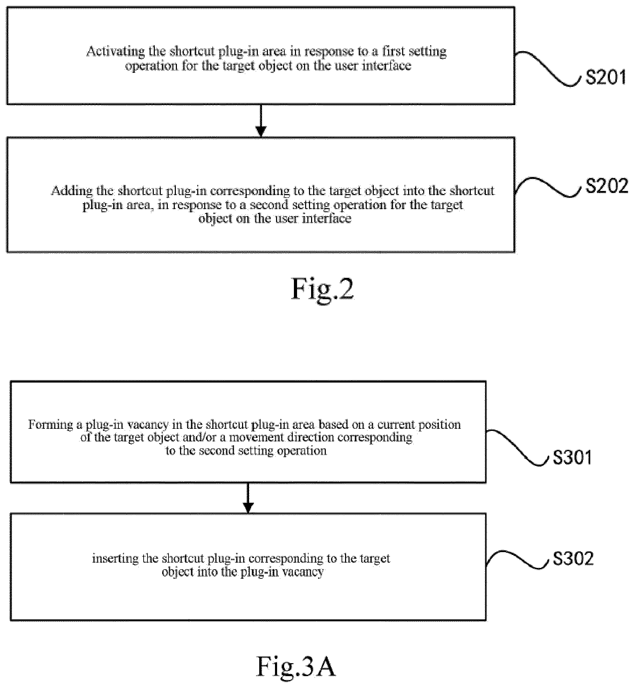

In another embodiment, the manner of adding the shortcut plug-in corresponding to the target object into the shortcut plug-in area can also refer to the embodiments shown in Fig. 2, Fig. 3A, or Fig. 6A.

As can be seen from the above description, by displaying a shortcut plug-in area in a setting range on a user interface, in response to detecting a preset operation for the user interface; and adding a shortcut plug-in corresponding to a target object into the shortcut plug-in area, the present embodiment can quickly display the shortcut plug-in area based on the preset operation of the user. This can accurately and quickly add the shortcut plug-in into the displayed shortcut plug-in area according to the needs of the users, without requiring the user to spend extra time in searching for an APP that needs to be added in a specific option in the system setting, which can simplify the operation process of setting the shortcut plug-in, improve the efficiency of adding the shortcut plug-in, and then improve the user experience.

Fig. 2 is a flowchart illustrating how to add a shortcut plug-in corresponding to the target object into the shortcut plug-in area according to an exemplary embodiment. Based on the above embodiment, the present embodiment describes how to add the shortcut plug-in corresponding to the target object into the shortcut plug-in area as an example. As shown in Fig. 2, the step S102 of adding a shortcut plug-in corresponding to a target object into the shortcut plug-in area may include following steps S201-S202.

In step S201, the shortcut plug-in area is activated in response to a first setting operation for the target object on the user interface.

In this embodiment, after the terminal device displays a shortcut plug-in area in a setting range on a user interface in response to detecting a preset operation for the user interface, if a first setting operation for the target object on the desktop is detected, the shortcut plug-in area may be activated.

It is worth noting that the above-mentioned first setting operation may include a long press, and the like, which is not limited in this embodiment.

In the embodiment, the activation of the shortcut plug-in area may include changing the shortcut plug-in area from a default state to an editable state. It can be understood that when the shortcut plug-in area is in an activated state, shortcut plug-ins can be added and deleted in the shortcut plug-in area based on user operations, and the display sequence of each shortcut plug-in in the shortcut plug-in area can also be changed.

In step S202, the shortcut plug-in corresponding to the target object is added into the shortcut plug-in area, in response to a second setting operation for the target object on the user interface.

It is worth noting that the above-mentioned second setting operation may include dragging and the like, which is not limited in this embodiment.

In this embodiment, after the terminal device activates the shortcut plug-in area in response to the first setting operation for the target object on the user interface, if a second setting operation for the target object on the user interface is detected, the shortcut plug-in corresponding to the target object may be added into the shortcut plug-in area in response to the second setting operation.

For example, when the terminal device detects a first setting operation (for example, a long-press operation) for a music player APP on the desktop, the shortcut plug-in area may be activated. Further, when the terminal device detects a second setting operation (such as a dragging operation) for the music player APP, a shortcut plug corresponding to the music player APP may be added into the above-mentioned shortcut plug-in area in response to the operation.

It can be known from the above description that, by activating the shortcut plug-in area in response to a first setting operation for the target object on the user interface; and adding the shortcut plug-in corresponding to the target object into the shortcut plug-in area in response to a second setting operation for the target object on the user interface, the present embodiment can implement fast and accurate addition of the shortcut plug-in into the shortcut plug-in area based on user needs, and can visualize the addition process, increase the fun of the addition process. In addition, since the shortcut plug-in corresponding to the target object is added into the shortcut plug-in area after the shortcut plug-in area is activated, malfunction can be avoided to a certain extent, and the stability of the shortcut plug-in area is guaranteed.

Fig. 3A is a flowchart illustrating how to add a shortcut plug-in corresponding to the target object into the shortcut plug-in area according to another exemplary embodiment. Based on the above embodiment, the present embodiment describes how to add the shortcut plug-in corresponding to the target object into the shortcut plug-in area as an example. As shown in Fig. 3A, the step S202 of adding the shortcut plug-in corresponding to the target object into the shortcut plug-in area in response to a second setting operation for the target object on the user interface may include following steps S301-S302.

In step S301, a plug-in vacancy is formed in the shortcut plug-in area based on a current position of the target object and/or a movement direction corresponding to the second setting operation.

In this embodiment, after the terminal device activates the shortcut plug-in area in response to the first setting operation for the target object on the user interface, if a second setting operation for the target object on the user interface is detected, a plug-in vacancy may be formed in the shortcut plug-in area based on a current position of the target object and/or a movement direction corresponding to the second setting operation.

For example, when the terminal device detects a first setting operation (for example, a long-press operation) for a music player APP on the desktop, the shortcut plug-in area may be activated. Further, when the terminal device detects a second setting operation (such as a dragging operation) for the music player APP, a shortcut plug corresponding to the music player APP may be added into the above-mentioned shortcut plug-in area in response to the operation.

In step S302, the shortcut plug-in corresponding to the target object is inserted into the plug-in vacancy.

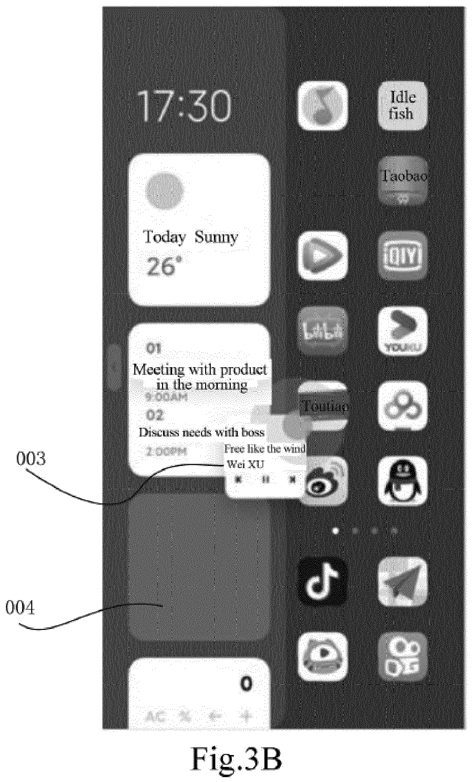

Fig. 3B is a schematic diagram of inserting a shortcut plug-in corresponding to a target object into a plug-in vacancy according to an exemplary embodiment.

As shown in Fig. 3B, after the terminal device detects a setting operation for a target object on the user interface, a plug-in vacancy 004 may be formed in the shortcut plug-in area between the memo plug-in and the calculator plug-in, based on a movement direction corresponding to the second setting operation. Based on this, the shortcut plug-in 003 corresponding to the target object can be inserted into the plug-in vacancy 004.

It can be known from the foregoing description that, by forming a plug-in vacancy in the shortcut plug-in area based on a current position of the target object and/or a movement direction corresponding to the second setting operation; and then inserting the shortcut plug-in corresponding to the target object into the plug-in vacancy, the present embodiment can quickly and accurately add the shortcut plug-in into the shortcut plug-in area based on requirements of the users, and can visualize the adding process, increase fun of the adding process of the shortcut plug-in. Besides, a specific position of inserting the shortcut plug-in may be determined based on requirements of the users, which can ensure that the insertion position of the shortcut plug-in meets requirements of the user.

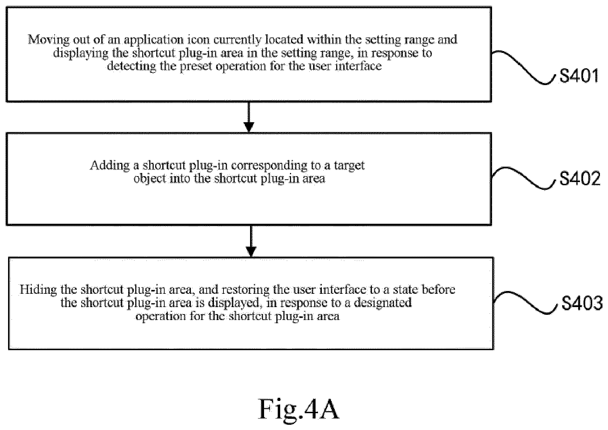

Fig. 4A is a flowchart showing a method for adding a shortcut plug-in according to another exemplary embodiment. The method for adding a shortcut plug-in can be applied to a terminal device, such as a smart phone, a tablet computer, a wearable device, and the like . As shown in Fig. 4A, the method for adding a shortcut plug-in includes following steps S401-S403.

In step S401: an application icon currently located within the setting range is removed and the shortcut plug-in area is displayed in the setting range, in response to detecting the preset operation for the user interface.

In this embodiment, when the terminal device detects a preset operation for the user interface, it can detect whether an application icon exists within a setting range for displaying the shortcut plug-in area. Further, when it detects that an application icon exists, an application icon currently located in the setting range may be moved out of the setting range, and the shortcut plug-in area may be displayed in the setting range.

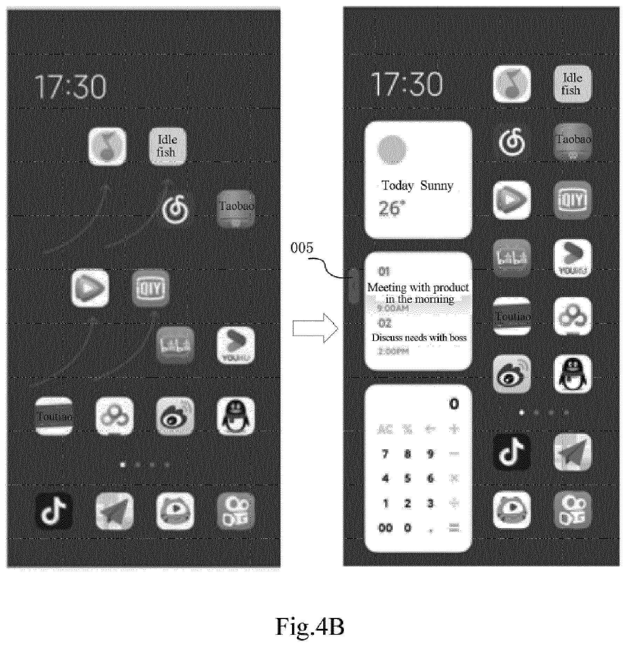

Fig. 4B is a schematic diagram of removing an application icon within a setting range for displaying a shortcut plug-in area according to an exemplary embodiment.

As shown in Fig. 4B, when the terminal device detects a setting range for displaying a shortcut plug-in area, such as an application icon exists in a left half part of the terminal screen, positions of icons of the applications such as QQ music, idle fish, Tencent video, iQiyi, etc. may be recalculated, so that the icons on the current screen are rearranged, and these icons are moved out of the setting range in sequence, such as being moved to a right side of the screen for arrangement, such that operation of adding the shortcut plug-ins into the displayed shortcut plug-in area subsequently may be achieved.

In step S402: a shortcut plug-in corresponding to a target object is added into the shortcut plug-in area.

For the related explanation and description of step S402, reference may be made to the foregoing embodiment, which is not described in this embodiment.

In step S403: the shortcut plug-in area is hidden, and the user interface is restored to a state before the shortcut plug-in area is displayed, in response to a designated operation for the shortcut plug-in area.

In this embodiment, when the shortcut plug-in area is displayed within the setting range of the user interface, if a designated operation for the shortcut plug-in area is detected, the shortcut plug-in area may be hidden, and the user interface may be restored to a state before the shortcut plug-in area is displayed.

In the embodiment, the above designated operation for the shortcut plug-in area can be freely set by the developer or the user as needed, such as setting to click a return key 005 on a left edge of the desktop, or sliding the bottom icon dock area to the left, etc., thereby enabling the user interface return to a normal state, that is, the state where there is no desktop plug-in area on the left.

As can be seen from the above description, by removing an application icon currently located within the setting range and displaying the shortcut plug-in area in the setting range in response to detecting the preset operation for the user interface, the present embodiment can visualize the display process of the shortcut plug-in area, increase fun of the display process of the shortcut plug-in area. Besides, by hiding the shortcut plug-in area and restoring the user interface to a state before the shortcut plug-in area is displayed, in response to a designated operation for the shortcut plug-in area, the present embodiment can hide the shortcut plug-in area based on actual needs of the user, which improves variability and intelligence of the user interface.

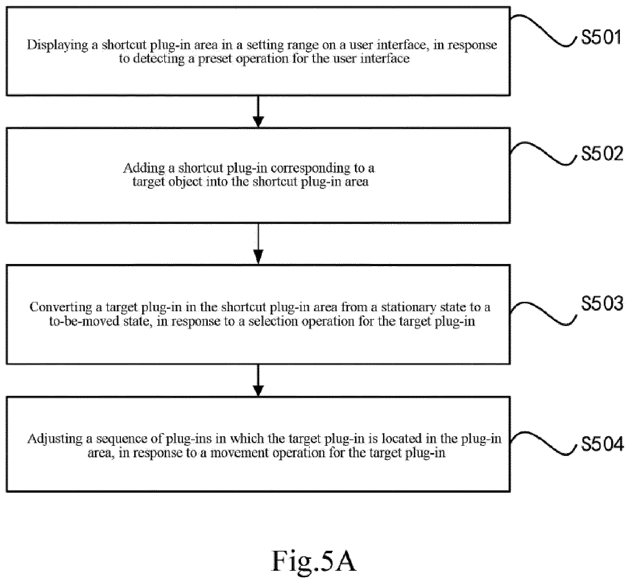

Fig. 5A is a flowchart illustrating a method for adding a shortcut plug-in according to still another exemplary embodiment. The method for adding a shortcut plug-in may be applied to a terminal device, such as a smart phone, a tablet computer, a wearable device, and the like. As shown in FIG. 5A, the method for adding a shortcut plug-in includes following steps S501-S504.

In step S501: a shortcut plug-in area is displayed in a setting range on a user interface, in response to detecting a preset operation for the user interface, wherein the shortcut plug-in area is used to provide one or more shortcut plug-ins therein.

In step S502: a shortcut plug-in corresponding to a target object is added into the shortcut plug-in area.

For related explanation and description of the step S502, reference may be made to the foregoing embodiment, which is not described in this embodiment.

In step S503: a target plug-in in the shortcut plug-in area is converted from a stationary state to a to-be-moved state, in response to a selection operation for the target plug-in.

In this embodiment, when the terminal device detects a selection operation of the user for a target plug-in in the shortcut plug-in area, the target plug-in may be converted from a stationary state to a to-be-moved state.

It is worth noting that the above to-be-moved state may be reflected by enlarging the plug-in image, to prompt the user that the target plug-in can be moved currently.

In step S504: a sequence of plug-ins in which the target plug-in is located in the plug-in area is adjusted, in response to a movement operation for the target plug-in.

In this embodiment, after the target plug-in is converted from the stationary state to the to-be-moved state, if the terminal device detects a movement operation of the user for the target plug-in, a sequence of plug-ins in which the target plug-in is located in the plug-in area may be adjusted based on the movement operation.

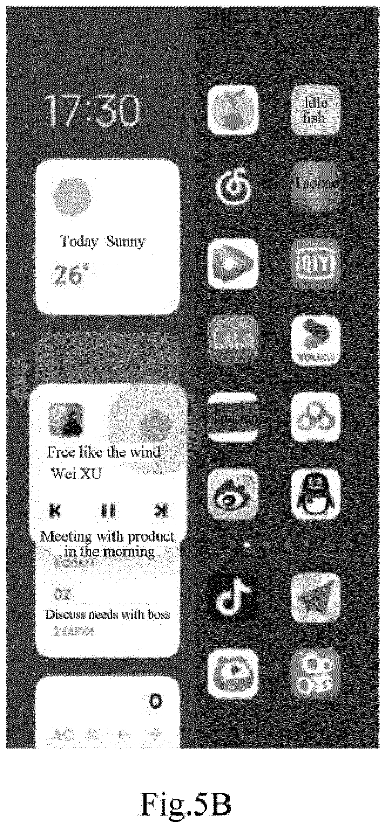

For example, Fig. 5B is a schematic diagram illustrating adjusting a sequence of plug-ins in which the target plug-in is located in the plug-in area according to an exemplary embodiment. As shown in Fig. 5B, when the terminal device detects a long-press operation for the shortcut plug-in of the music player APP, an image of the plug-in will be enlarged to prompt the user that the plug-in is picked up by a finger, and then when the finger of the user drags the plug-in up and down, the plug-in can be moved to a specified position with dragging, so that the sequence of plug-ins in which the target plug-in is located in the plug-in area may be adjusted. In the process of moving the position, the position of the plug-in can be determined according to a center point of the finger's movement. When the finger moves to be between the center points of the two plug-ins, the plug-in near the bottom will move the position, leaving a position for the currently picked up plug-in.

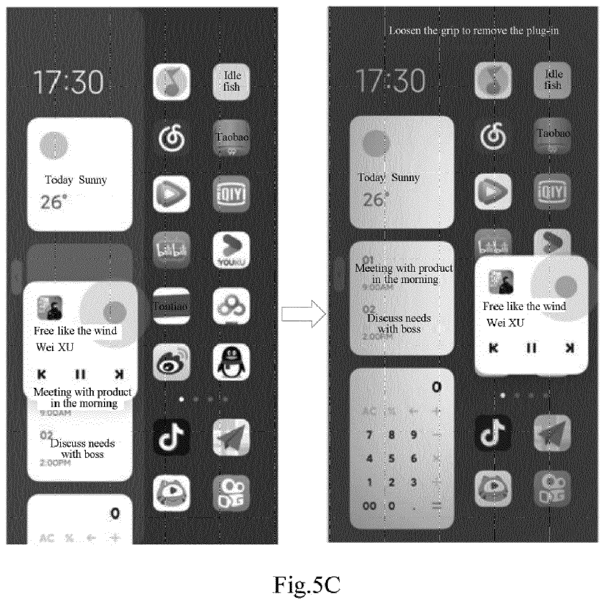

Further, Fig. 5C is a schematic diagram illustrating removing a plug-in in a plug-in area according to an exemplary embodiment. As shown in Fig. 5C, after converting a target plug-in in the shortcut plug-in area from a stationary state to a to-be-moved state in response to a selection operation for the target plug-in, the terminal device may move out of the target plug-in from the plug-in area in response to the movement operation for the target plug-in. For example, as shown in the right part of Fig. 5C, when the plug-in is moved out of the plug-in area, different colors (such as red) can be displayed around the terminal screen, to prompt the user that if they loosen their grip, the target plug-in is released, the target plug-in will be deleted from the plug-in area.

It can be known from the foregoing description that, by converting a target plug-in in the shortcut plug-in area from a stationary state to a to-be-moved state, in response to a selection operation for the target plug-in; and adjusting a sequence of plug-ins in which the target plug-in is located in the plug-in area, in response to a movement operation for the target plug-in, the present embodiment can adjust the sequence of the target plug-ins located in the plug-in area based on user needs, which is convenient for users to find and use in the future, and undesired plug-ins can be deleted from the plug-in area based on user operation, to effectively manage the shortcut plug-in area and meet actual needs of the users.

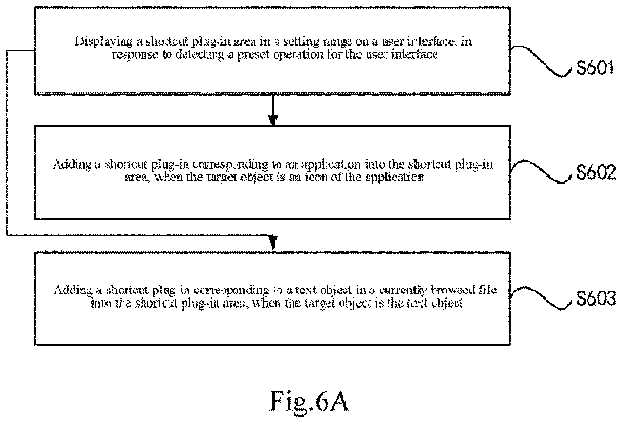

Fig. 6A is a flowchart illustrating a method for adding a shortcut plug-in according to yet still another exemplary embodiment. The method for adding a shortcut plug-in may be applied to a terminal device (such as a smart phone, a tablet computer, a wearable device, etc.). As shown in Fig. 6A, the method for adding a shortcut plug-in includes following steps S601-S603.

In step S601, a shortcut plug-in area is displayed in a setting range on a user interface, in response to detecting a preset operation for the user interface, wherein the shortcut plug-in area is used to provide one or more shortcut plug-ins therein.

For related explanation and description of step S601, reference may be made to the foregoing embodiment, which is not described in this embodiment.

In step S602, a shortcut plug-in corresponding to an application is added into the shortcut plug-in area, when the target object is an icon of the application.

In step S603, a shortcut plug-in corresponding to a text object in a currently browsed file is added into the shortcut plug-in area, when the target object is the text object.

For example, after the terminal device displays the shortcut plug-in area in the setting range on the user interface, if a setting operation for the target object by the terminal device is detected, a type of the target object can be determined:

If the target object is an icon of an application, a shortcut plug-in corresponding to the application may be added into the shortcut plug-in area. It is worth noting that during the process of adding a shortcut plug-in of the application, the icon of the application on the user interface may not change.

In step S603, a shortcut plug-in corresponding to a text object in a currently browsed file is added into the shortcut plug-in area, when the target object is the text object.

In another case, if the target object is a text object in the currently browsed file, such as a work plan form in a chat history, a shortcut plug-in corresponding to the form may be added into the shortcut plug-in area and displayed permanently.

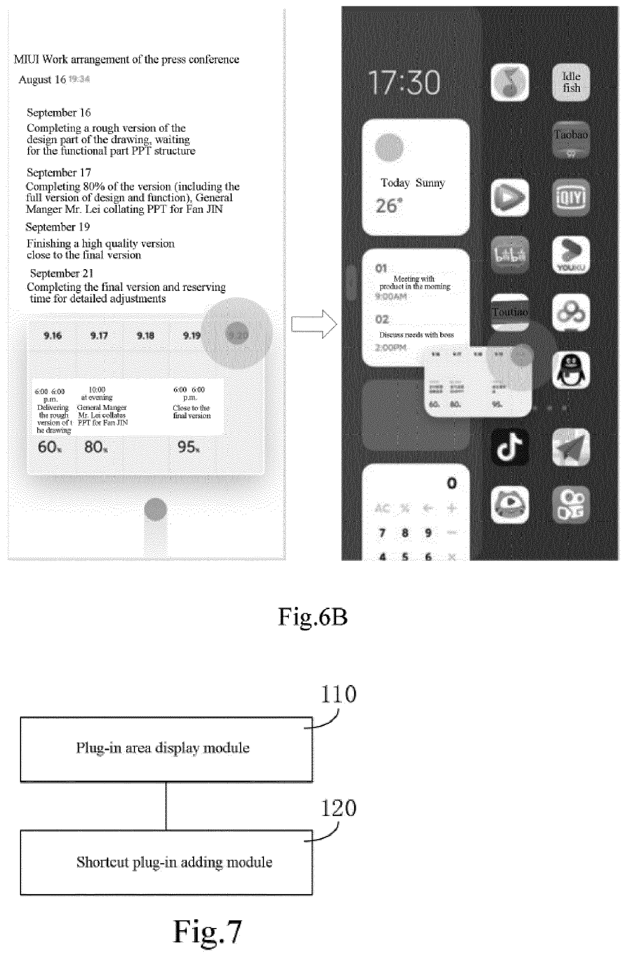

For example, Fig. 6B is a schematic diagram of adding a shortcut plug-in corresponding to a text object in a currently browsed file into the shortcut plug-in area according to an exemplary embodiment. As shown in Fig. 6B, the user can long-press and drag a form (for example, work schedule) of a file in the chat record to add it as a desktop plug-in, which is convenient for subsequent viewing at any time. Specifically, after dragging the form back to the desktop, the plug-in area will be activated. In this case, the form plug-in can be pressed close to the desktop plug-in area. Once the form plug-in enters into the plug-in area, other plug-ins will vacate a position for the form plug-in, and an area shadow of the placement position will appear to prompt the user to loosen their grip. After the user loosens their grip, the form can be added into the shortcut plug-in area, for subsequent viewing by the user.

It can be known from the foregoing description that, by adding a shortcut plug-in corresponding to an application into the shortcut plug-in area, when the target object is an icon of the application; or, adding a shortcut plug-in corresponding to a text object in a currently browsed file into the shortcut plug-in area, when the target object is the text object, the present embodiment can implement addition of shortcut plug-ins in different ways based on different types of target objects, and can rapidly and accurately add the shortcut plug-in corresponding to the target object into the shortcut plug-in area, which greatly simplifies the process of adding the shortcut plug-in, improves the efficiency of adding the shortcut plug-in, and further improves the user experience.

Fig. 7 is a block diagram of an apparatus for adding a shortcut plug-in according to an exemplary embodiment. As shown in Fig. 7, the apparatus includes a plug-in area display module 110 and a shortcut plug-in adding module 120.

The plug-in area display module 110 is configured to display a shortcut plug-in area in a setting range on a user interface, in response to detecting a preset operation for the user interface, wherein the shortcut plug-in area is used to provide one or more shortcut plug-ins therein.

The shortcut plug-in adding module 120 is configured to add a shortcut plug-in corresponding to a target object into the shortcut plug-in area.

As can be seen from the above description, by displaying a shortcut plug-in area in a setting range on a user interface, in response to detecting a preset operation for the user interface; and adding a shortcut plug-in corresponding to a target object into the shortcut plug-in area, the present embodiment can quickly display the shortcut plug-in area based on the preset operation of the user. This can accurately and quickly add the shortcut plug-in into the displayed shortcut plug-in area according to the needs of the users, without requiring the user to spend extra time in searching for an APP that needs to be added in a specific option in the system setting, which can simplify the operation process of setting the shortcut plug-in, improve the efficiency of adding the shortcut plug-in, and then improve the user experience.

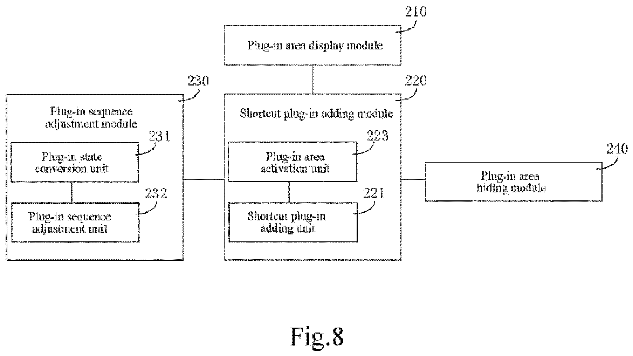

Fig. 8 is a block diagram illustrating an apparatus for adding a shortcut plug-in according to another exemplary embodiment. In the embodiment, functions of a plug-in area display module 210 and a shortcut plug-in adding module 220 are the same as the plug-in area display module 110 and the shortcut plug-in adding module 120 in the foregoing embodiment shown in Fig. 7, and details are not described herein. As shown in Fig. 8, the shortcut plug-in adding module 220 may include:
a plug-in area activation unit 221, configured to activate the shortcut plug-in area in response to a first setting operation for the target object on the user interface;
a shortcut plug-in adding unit 222, configured to add the shortcut plug-in corresponding to the target object into the shortcut plug-in area, in response to a second setting operation for the target object on the user interface.

In an embodiment, the shortcut plug-in adding unit 222 is further configured to:
form a plug-in vacancy in the shortcut plug-in area based on a current position of the target object and/or a movement direction corresponding to the second setting operation;
insert the shortcut plug-in corresponding to the target object into the plug-in vacancy.

In an embodiment, the plug-in area display module 210 is further configured to move out of an application icon currently located within the setting range and display the shortcut plug-in area in the setting range, in response to detecting the preset operation for the user interface.

In an embodiment, the apparatus may further include a plug-in sequence adjustment module 230,
wherein the plug-in sequence adjustment module 230 may include:
a plug-in state conversion unit 231, configured to convert a target plug-in in the shortcut plug-in area from a stationary state to a to-be-moved state, in response to a selection operation for the target plug-in;
a plug-in sequence adjustment unit 232, configured to adjust a sequence of plug-ins in which the target plug-in is located in the plug-in area, in response to a movement operation for the target plug-in.

In an embodiment, the apparatus may further includes:
a plug-in area hiding module 240, configured to hide the shortcut plug-in area, and restore the user interface to a state before the shortcut plug-in area is displayed, in response to a designated operation for the shortcut plug-in area.

In an embodiment, the shortcut plug-in adding module 220 is further configured to:
add a shortcut plug-in corresponding to an application into the shortcut plug-in area, when the target object is an icon of the application; or,
add a shortcut plug-in corresponding to a text object in a currently browsed file into the shortcut plug-in area, when the target object is the text object.

Regarding the apparatus in the above embodiment, the specific manner in which each module performs operations has been described in detail in the embodiment of the method, and will not be described in detail herein.

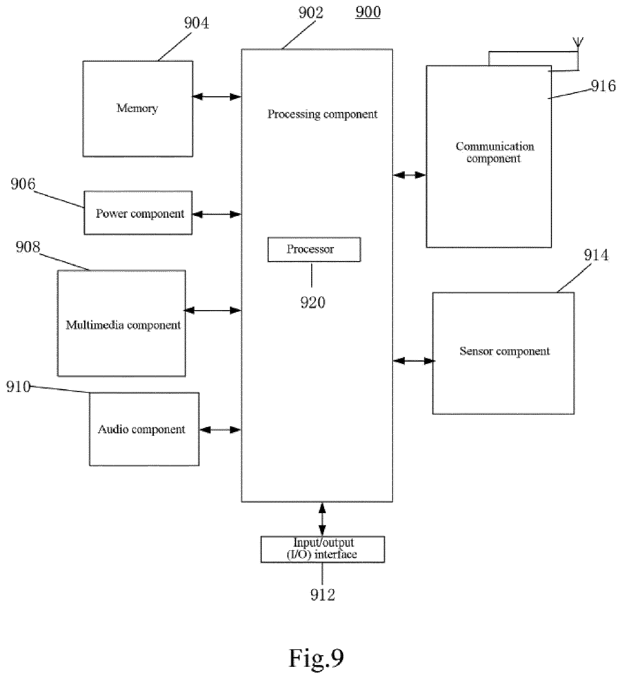

Fig. 9 is a block diagram of an apparatus 900 for UAV control according to an exemplary embodiment. For example, the apparatus 900 can be a mobile phone, a computer, a digital broadcast terminal, a messaging apparatus, a game console, a tablet apparatus, a medical apparatus, a fitness apparatus, a personal digital assistant, and the like.

Referring to Fig. 9, the apparatus 900 may include one or more of the following components: a processing component 902, a memory 904, a power component 906, a multimedia component 908, an audio component 910, an input/output (I/O) interface 912, a sensor component 914, and a communication component 916.

The processing component 902 typically controls overall operations of the apparatus 900, such as the operations associated with display, phone call, data communications, camera operations, and recording operations. The processing component 902 may include one or more processors 920 to execute instructions, to perform all or part of the steps of the above method. Moreover, the processing component 902 may include one or more modules which facilitate the interaction between the processing component 902 and other components. For instance, the processing component 902 may include a multimedia module to facilitate the interaction between the multimedia component 908 and the processing component 902.

The memory 904 is configured to store various types of data to support the operation of the apparatus 900. Examples of such data include instructions for any applications or methods operated on the apparatus 900, contact data, telephone directory data, messages, pictures, video, etc. The memory 904 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 906 provides power to various components of the apparatus 900. The power component 906 may include a power management system, one or more power sources, and any other components associated with the generation, management, and distribution of power in the apparatus 900.

The multimedia component 908 includes a screen providing an output interface between the apparatus 900 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 908 includes a front camera and/or a rear camera. When the apparatus 900 is in an operation mode, such as a shooting mode or a video mode, the front camera and/or the rear camera can receive external multimedia data. Each front and rear camera can be a fixed optical lens system or have focal length and optical zoom capability.

The audio component 910 is configured to output and/or input audio signals. For example, the audio component 910 includes a microphone ("MIC") configured to receive an external audio signal when the apparatus 900 is in an operation mode, such as a call mode, a recording mode, and a voice recognition mode. The received audio signal may be further stored in the memory 904 or transmitted via the communication component 916. In some embodiments, the audio component 910 further includes a speaker to output audio signals.

The I/O interface 912 provides an interface between the processing component 902 and peripheral interface modules, such as a keyboard, a click wheel, buttons, and the like. These buttons may include, but are not limited to, a home button, a volume button, a start button, and a lock button.

The sensor component 914 includes one or more sensors to provide status assessments of various aspects of the apparatus 900. For instance, the sensor component 914 may detect an on/off status of the apparatus 900, relative positioning of components, e.g., the display and the keypad, of the apparatus 900, a change in position of the apparatus 900 or a component of the apparatus 900, a presence or absence of user contact with the apparatus 900, an orientation or an acceleration/deceleration of the apparatus 900, and a change in temperature of the apparatus 900. The sensor component 914 may include a proximity sensor configured to detect the presence of nearby objects without any physical contact. The sensor component 914 may also include a light sensor, such as a CMOS or CCD image sensor, for use in imaging applications. In some embodiments, the sensor component 914 may also include an accelerometer sensor, a gyroscope sensor, a magnetic sensor, a pressure sensor, or a temperature sensor.

The communication component 916 is configured to facilitate communication, wired or wirelessly, between the apparatus 900 and other devices. The apparatus 900 can access a wireless network based on a communication standard, such as WiFi, 2G, or 3G, or a combination thereof. In one exemplary embodiment, the communication component 916 receives a broadcast signal or broadcast associated information from an external broadcast management system via a broadcast channel. In one exemplary embodiment, the communication component 916 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the apparatus 900 may be implemented with one or more application specific integrated circuits (ASICs), digital signal processors (DSPs), digital signal processing devices (DSPDs), programmable logic devices (PLDs), field programmable gate arrays (FPGAs), remote control devices, micro remote control devices, microprocessors, or other electronic components, to perform the above method for adding a shortcut plug-in.

In exemplary embodiments, there is also provided a non-transitory computer-readable storage medium including instructions, such as included in the memory 904, executable by the processor 920 in the apparatus 900 to perform the above method. For example, the non-transitory computer-readable storage medium may be a ROM, a random access memory (RAM), a CD-ROM, a magnetic tape, a floppy disc, an optical data storage apparatus, and the like.

Other embodiments of the disclosure will be apparent to those skilled in the art from consideration of the specification and practice of the disclosure disclosed here. This application is intended to cover any variations, uses, or adaptations of the disclosure following the general principles thereof and including such departures from the present disclosure as come within known or customary practice in the art. It is intended that the specification and examples be considered as exemplary only, with a true scope of the disclosure being indicated by the following claims.

It will be appreciated that the present disclosure is not limited to the exact construction that has been described above and illustrated in the accompanying drawings, and that various modifications and changes may be made without departing from the scope thereof. It is intended that the scope of the disclosure only be limited by the appended claims.

## Claims

1. A method for adding a shortcut plug-in, applied to a terminal, wherein the method comprises:
displaying (S101, S501, S601) a shortcut plug-in area in a setting range of a user interface in response to detecting a preset operation for the user interface, the shortcut plug-in area being used to provide one or more shortcut plug-ins therein; and
adding (S102, S402, S502) a shortcut plug-in corresponding to a target object into the shortcut plug-in area.

2. The method according to claim 1, wherein the adding (S102, S402, S502) the shortcut plug-in corresponding to the target object into the shortcut plug-in area comprises:
activating (S201) the shortcut plug-in area in response to a first setting operation for the target object on the user interface;
adding (S202) the shortcut plug-in corresponding to the target object into the shortcut plug-in area, in response to a second setting operation for the target object on the user interface.

3. The method according to claim 2, wherein the adding (S202) the shortcut plug-in corresponding to the target object into the shortcut plug-in area, in response to the second setting operation for the target object on the user interface, comprises:
forming (S301) a plug-in vacancy in the shortcut plug-in area based on a current position of the target object and/or a movement direction corresponding to the second setting operation;
inserting (S302) the shortcut plug-in corresponding to the target object into the plug-in vacancy.

4. The method according to any one of the preceding claims, wherein the displaying (S101, S501, S601) a shortcut plug-in area in a setting range on a user interface, in response to detecting a preset operation for the user interface, comprises:
moving (S401) out of an application icon currently located within the setting range and displaying the shortcut plug-in area in the setting range in response to detecting the preset operation for the user interface.

5. The method according to any one of the preceding claims, further comprising:
converting (S503) a target plug-in in the shortcut plug-in area from a stationary state to a to-be-moved state, in response to a selection operation for the target plug-in;
adjusting (S504) a sequence of plug-ins in which the target plug-in is located in the plug-in area, in response to a movement operation for the target plug-in.

6. The method according to any one of the preceding claims, further comprising:
hiding (S403) the shortcut plug-in area, and restoring the user interface to a state before the shortcut plug-in area is displayed, in response to a designated operation for the shortcut plug-in area.

7. The method according to any one of the preceding claims, wherein the adding (S102, S402, S502) the shortcut plug-in corresponding to the target object into the shortcut plug-in area comprises:
adding (S602) a shortcut plug-in corresponding to an application into the shortcut plug-in area, when the target object is an icon of the application; or,
adding (S603) a shortcut plug-in corresponding to a text object in a currently browsed file into the shortcut plug-in area, when the target object is the text object.

8. An apparatus for adding a shortcut plug-in, applied to a terminal, wherein the apparatus comprises:
a plug-in area display module (110, 210), configured to display a shortcut plug-in area in a setting range of a user interface in response to detecting a preset operation for the user interface, the shortcut plug-in area being used to provide one or more shortcut plug-ins therein; and
a shortcut plug-in adding module (120, 220), configured to add a shortcut plug-in corresponding to a target object into the shortcut plug-in area.

9. The apparatus according to claim 8, wherein the shortcut plug-in adding module (120, 220) comprises:
a plug-in area activation unit (221), configured to activate the shortcut plug-in area in response to a first setting operation for the target object on the user interface;
a shortcut plug-in adding unit (222), configured to add the shortcut plug-in corresponding to the target object into the shortcut plug-in area, in response to a second setting operation for the target object on the user interface.

10. The apparatus according to claim 9, wherein the shortcut plug-in adding unit (222) is further configured to:
form a plug-in vacancy in the shortcut plug-in area based on a current position of the target object and/or a movement direction corresponding to the second setting operation;
insert the shortcut plug-in corresponding to the target object into the plug-in vacancy.

11. The apparatus according to any one of claims 8 to 10, wherein the plug-in area display module (110, 210) is further configured to move out of an application icon currently located within the setting range and display the shortcut plug-in area in the setting range in response to detecting the preset operation for the user interface.

12. The apparatus according to any one of claims 8 to 11, further comprising a plug-in sequence adjustment module (230),
wherein the plug-in sequence adjustment module (230) comprises:
a plug-in state conversion unit (231), configured to convert a target plug-in in the shortcut plug-in area from a stationary state to a to-be-moved state, in response to a selection operation for the target plug-in;
a plug-in sequence adjustment unit (232), configured to adjust a sequence of plug-ins in which the target plug-in is located in the plug-in area in response to a movement operation for the target plug-in, alternatively, the apparatus further comprises:
a plug-in area hiding module (240), configured to hide the shortcut plug-in area, and restore the user interface to a state before the shortcut plug-in area is displayed, in response to a designated operation for the shortcut plug-in area.

13. The apparatus according to any one of claims 8 to 12, wherein the shortcut plug-in adding module (120, 220) is further configured to:
add a shortcut plug-in corresponding to an application into the shortcut plug-in area, when the target object is an icon of the application; or,
add a shortcut plug-in corresponding to a text object in a currently browsed file into the shortcut plug-in area, when the target object is the text object.

14. An intelligent device, comprising:
a processor and a memory for storing instructions executable by the processor,
wherein the processor is configured to:
display a shortcut plug-in area in a setting range of a user interface in response to detecting a preset operation for the user interface, the shortcut plug-in area being used to provide one or more shortcut plug-ins therein; and
add a shortcut plug-in corresponding to a target object into the shortcut plug-in area.

15. A computer-readable storage medium having stored thereon a computer program, wherein the program implements following steps when executed by a processor:
displaying (S101, S501, S601) a shortcut plug-in area in a setting range of a user interface, in response to detecting a preset operation for the user interface, the shortcut plug-in area being used to provide one or more shortcut plug-ins therein; and
adding (S102, S402, S502) a shortcut plug-in corresponding to a target object into the shortcut plug-in area.
